(19) Europäisches Patentamt / European Patent Office / Office européen des brevets

(11) **EP 4 099 600 A1**

(12) **EUROPEAN PATENT APPLICATION**

(43) Date of publication:
**07.12.2022 Bulletin 2022/49**

(21) Application number: **21177648.9**

(22) Date of filing: **03.06.2021**

(51) International Patent Classification (IPC):
*H04L 5/00* (2006.01)     *H04W 72/04* (2009.01)
*H04W 72/12* (2009.01)

(52) Cooperative Patent Classification (CPC):
**H04L 5/0048; H04L 5/001; H04L 5/0019;
H04L 5/0039; H04L 5/0094**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Volkswagen Aktiengesellschaft
38440 Wolfsburg (DE)**

(72) Inventor: **Pfadler, Andreas
13357 Berlin (DE)**

(54) **ACCESS NODE, USER EQUIPMENT, METHODS, APPARATUSES AND COMPUTER PROGRAMS FOR TRANSMITTING AND RECEIVING DATA IN A MOBILE COMMUNICATION SYSTEM**

(57) Embodiments of the present disclosure relate to an access node, user equipment, apparatuses, methods, and computer programs for transmitting and/or receiving data in a mobile communication system The method (10) for transmitting data in a mobile communication system (500) using multiple carriers comprises obtaining (12) information on conducting a transmission on two or more contiguous carriers, applying (14) a spreading operation to a transmit signal across an aggregated bandwidth of the two or more contiguous carriers to obtain a spread signal, and transmitting (16) data to a wireless device (300; 400) using the spread signal.

10

obtaining information on conducting a
transmission on two or more contiguous carriers — 12

applying a spreading operation to a transmit signal across
an aggregated bandwidth of the two or more
contiguous carriers to obtain a spread signal — 14

transmitting data to a wireless device
using the spread signal — 16

**Fig. 1**

EP 4 099 600 A1

**Description**

Embodiments of the present disclosure relate to an access node, user equipment, apparatuses, methods, and computer programs for transmitting and/or receiving data in a mobile communication system, more particularly, but not exclusively to a concept for enabling efficient communication using carrier aggregation in a mobile communication system.

New requirements in terms of reliability and efficiency in high mobility environments, such as vehicle-to-vehicle (V2V) communication, are pushing legacy systems to their limits. Orthogonal frequency-division multiplexing (OFDM) is a popular and well-known modulation scheme but it may suffer from substantial performance degradation and inflexibility in environments with high Doppler spreads. Consequently, novel modulation schemes may be considered and perused which are flexible, efficient and robust in doubly-dispersive channels.

Orthogonal time frequency and space (OTFS) was introduced by Hadani et. al as a promising recent combination of classical pulse-shaped Weyl-Heisenberg (or Gabor) multicarrier schemes with a distinct time-frequency (TF) spreading. Data symbols are spread with the symplectic finite Fourier transform (SFFT) over the whole time-frequency grid. This particular linear pre-coding accounts for the doubly-dispersive nature of time-varying multipath channels seen as linear combinations of time-frequency shifts. Several studies show that OTFS outperforms OFDM in such situations. Other research focus on a performance comparison of OFDM, generalized frequency division multiplexing (GFDM), and OTFS. It reveals significant advantages of OTFS in terms of bit error rate (BER) and frame error rate (FER) in relation to the others. With sufficient accurate channel information it offers a promising increase in terms of reliability and robustness for high mobility users when using sophisticated equalizers. So far, OTFS was researched with the assumption of perfect grid-matching, often with idealized pulses violating the uncertainty principle and in many cases with ideal channel knowledge (including the cross-talk channel coefficients).

OTFS is a new modulation scheme that addresses the challenges for of 5th Generation mobile communication systems (5G). The key idea behind OTFS is to multiplex a QAM (quadrature amplitude modulation) or QPSK (Quadrature Phase Shift Keying) symbol (data) in the signal representation called the delay-Doppler representation. In order to do channel equalization, the wireless channel needs to be estimated at the receiver. This can be done by the insertion of pilots at the transmitter. The a-priory known pilot tones can be used by the receiver to estimate the channel.

Future vehicular communication systems require high reliability and efficiency under various mobility conditions. Therefore, new modulation schemes such as orthogonal time frequency and space (OTFS) modulation are under discussion for 6G (6th Generation). OTFS addresses the challenges for future communication systems, more details can be found in Wei, Zhiqiang, et al. "Orthogonal Time-Frequency Space Modulation: A Full-Diversity Next Generation Waveform." arXiv preprint arXiv:2010.03344 (2020).

Document WO 2019/036492 A1 describes methods, systems and devices for providing transmission resources that achieve transmission diversity while reducing pilot signal overhead. An exemplary wireless communication method may be implemented in a wireless communication system in which transmission resources are allocated on a per physical resource block (PRB) basis, where a PRB corresponds to a two-dimensional resource pattern comprising a first number of subcarriers along a frequency dimension and a second number time slots along a time dimension. The method includes logically dividing subcarriers in each PRB into an integer number of sub-groups of subcarriers, wherein the integer number is greater than one, allocating, to a transmission, transmission resources corresponding to one or more of the sub-groups of subcarriers, performing the transmission in the wireless communication system.

Document EP 3 367 602 A1 discloses a method and an apparatus for transmitting/receiving a downlink signal in a wireless communication system. Carrier information about a second carrier that is different from a first carrier can be transmitted on the first carrier. Downlink data for UE can be transmitted on the second carrier based on the carrier information. The first carrier is a carrier having a synchronization signal and a physical broadcast channel, and the second carrier can be a carrier without any synchronization signals or physical broadcast channels. The first carrier can be operated on a single resource block in a guard frequency that is used in the wireless communication system.

Document US 2019/0159134 A1 provides methods, systems, and devices for wireless communications that provide for managing transmissions using multiple component carriers (CCs) in which transmissions using one or more of the CCs may span less than a full transmission time of a slot or other transmission time interval. A UE may signal a capability to transmit such transmissions, and one or more capabilities related to carrier aggregation that may be used by a base station for scheduling of transmissions on different CCs. In the event that overlapping transmissions on two or more CCs exceed a maximum power threshold, various techniques for dropping at least a portion of one or more transmissions of one or more CCs are described.

In OTFS for each carrier channel estimation with pilots and guard symbols need to be done. The OTFS symbols are spread for each carrier (a carrier includes multiple subcarriers).

There is a demand for an improved concept for carrier aggregation in a mobile communication system, e.g. OTFS.

This demand is accommodated by the subject-matter of the independent claims.

Embodiments are based on the finding, that in the case of intra-band aggregation with contiguous component carriers the time frequency spreading or the physical/base band processing can be done not only over one but also two (or more) carriers. This may enable more efficient transmission as an overhead of control signaling may be reduced, e.g. a number of guard or pilot symbols may be decreased. Furthermore, a spreading gain may be increased with the increased bandwidth. It is a finding that data processing can be based on the aggregated bandwidth of contiguous carriers.

Embodiments provide a method for transmitting data in a mobile communication system using multiple carriers. The method comprises obtaining information on conducting a transmission on two or more contiguous carriers and applying a spreading operation to a transmit signal across an aggregated bandwidth of the two or more contiguous carriers to obtain a spread signal. The method further comprises transmitting data to a wireless device using the spread signal. Spreading the transmit signal over the aggregated bandwidth of the contiguous carriers enables an increased transmission efficiency.

In some embodiments the method further comprises generating one or more transmit symbols in a Delay-Doppler domain to obtain a Delay-Doppler representation and transforming the Delay-Doppler representation into a Time-Frequency domain to obtain a Time-Frequency representation as spread signal, the Time-Frequency representation having the aggregated bandwidth. Spreading over the aggregated bandwidth may further improve transmission efficiency.

The method may comprise adding pilot symbols to the spread signal, transforming the spread signal to the time domain to obtain a time domain representation, and transmitting the time domain representation to the wireless receiver device. Adapting the addition of the pilot symbols to the aggregated bandwidth of the spread signal may enable further improvements on the pilot overhead.

The method may comprise informing the wireless device on the aggregated bandwidth in some embodiments. Such signaling may enable quick adaptation of different aggregation options in a system with multiple carriers.

Furthermore, the method may comprise scheduling the wireless device based on the aggregated bandwidth. Scheduling the wireless device over the aggregated bandwidth may enable transmission of larger data packets at a time, which further contributes to an enhanced transmission efficiency.

The scheduling may comprise assigning at least a contiguous part of the aggregated bandwidth to the wireless device. Processing of a contiguous part may be more efficient than processing separate parts of the bandwidth.

In some embodiments the method may further comprise transmitting using groups of contiguous carriers in different bands. Using different band may increase transmission bandwidth and capacity. The groups of contiguous carriers in the different bands may be used for scheduling multiple users. Multiple users may potentially benefit from the contiguous carriers.

In embodiments the method may comprise prioritizing scheduling contiguous carriers over scheduling non-contiguous carriers to a user. In embodiments a scheduler may enhance transmission efficiency by prioritizing scheduling contiguous carriers.

The obtaining may comprise scheduling the transmission on the two or more contiguous carriers. The spreading may then be applied subsequently, such that scheduling options are maintained.

Embodiments also provide a method for receiving data in a mobile communication system using multiple carriers. The method comprises obtaining information on a transmission on two or more contiguous carriers and receiving a signal on the two or more contiguous carriers. The method may further comprise applying a de-spreading operation to the signal across an aggregated bandwidth of the two or more contiguous carriers to obtain a de-spread signal and detecting data from the de-spread signal.

Another embodiment is an apparatus for transmitting and/or receiving data in a mobile communication system using multiple carriers. The apparatus comprises a transceiver module configured to communicate in the mobile communication system and a processing module configured to control the transceiver module, and to perform one of the methods described herein.

An access node of a wireless or mobile communication system comprising an embodiment of the apparatus is another embodiment. User equipment for a wireless or mobile communication system comprising an embodiment of the apparatus is another embodiment.

Embodiments further provide a computer program having a program code for performing one or more of the above-described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Some other features or aspects will be described using the following non-limiting embodiments of apparatuses or methods or computer programs or computer program products by way of example only, and with reference to the accompanying figures, in which:

    Fig. 1 illustrates a block diagram of an embodiment of a method for transmitting data in a mobile communication system using multiple carriers;

Fig. 2 illustrates a block diagram of an embodiment of a method for receiving data in a mobile communication system using multiple carriers;

Fig. 3 illustrates block diagrams of embodiments of apparatuses for transmitting and/or receiving data in a mobile communication system using multiple carriers, an embodiment of user equipment, and an embodiment of an access node;

Fig. 4 shows multicarrier OTFS processing steps in an embodiment;

Fig. 5 illustrates symplectic Fourier duality in an embodiment;

Fig. 6 depicts an example for an OTFS basis function, which spreads one symbol in the DD domain over the entire time-frequency-domain in an embodiment;

Fig. 7 shows examples for an OTFS basis function which spreads the symbols in the time-frequency domain in an embodiment;

Fig. 8 illustrates carrier aggregation in embodiments;

Fig. 9 depicts a message sequence in an embodiment; and

Fig. 10 illustrates scheduling with carrier aggregation in an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

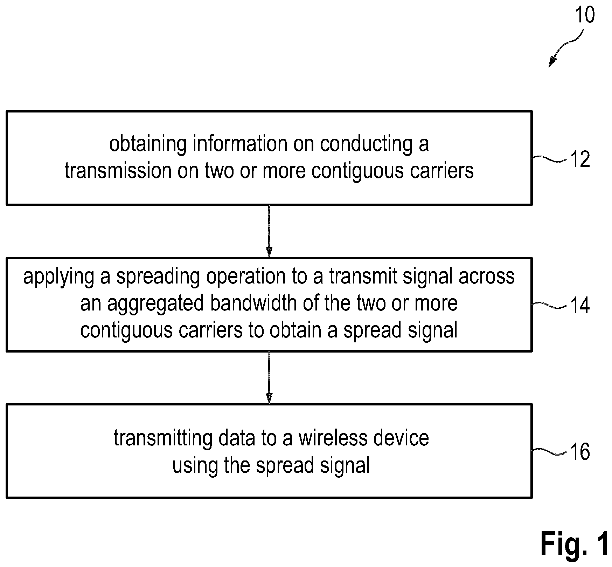

Fig. 1 illustrates a block diagram of an embodiment of a method 10 for transmitting data in a mobile communication system using multiple carriers. The method 10 comprises obtaining 12 information on conducting a transmission on two or more contiguous carriers and applying 14 a spreading operation to a transmit signal across an aggregated bandwidth of the two or more contiguous carriers to obtain a spread signal. The method 10 further comprises transmitting 16 data to a wireless device using the spread signal. Spreading the signal across the aggregated bandwidth may enable a number of advantageous effects. For example, a need for guard intervals/bands/symbols may be avoided as the aggregated carriers may be processed as one carrier with the aggregated bandwidth. Moreover, a reference or pilot symbol structure may be adapted to the aggregated bandwidth. The aggregated bandwidth may enable a higher resolution in the time/delay domain. For example, the obtaining 12 may comprise scheduling the transmission on the two or more contiguous carriers, which may be obtained by a scheduler or scheduling module.

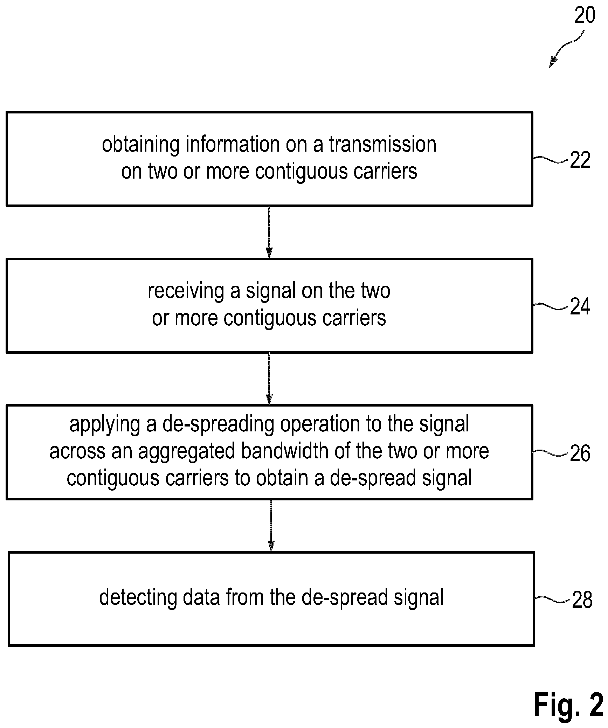

Fig. 2 illustrates a block diagram of an embodiment of a method 20 for receiving data in a mobile communication system using multiple carriers. The method 20 comprises obtaining 22 information on a transmission on two or more contiguous carriers and receiving 24 a signal on the two or more contiguous carriers. The method 20 further comprises applying 26 a de-spreading operation to the signal across an aggregated bandwidth of the two or more contiguous carriers to obtain a de-spread signal and detecting 28 data from the de-spread signal. Enabling processing of the signals in the aggregated bandwidth as one signal with the aggregated bandwidth may enable a number of advantageous effects as outlined above.

In the following processing will be mostly described from the transmitter perspective and equally applies to the receiver. Any processing or operation that is based on the aggregated bandwidth at the transmitter may analogously be carried out on the receiver side also based on the aggregated bandwidth.

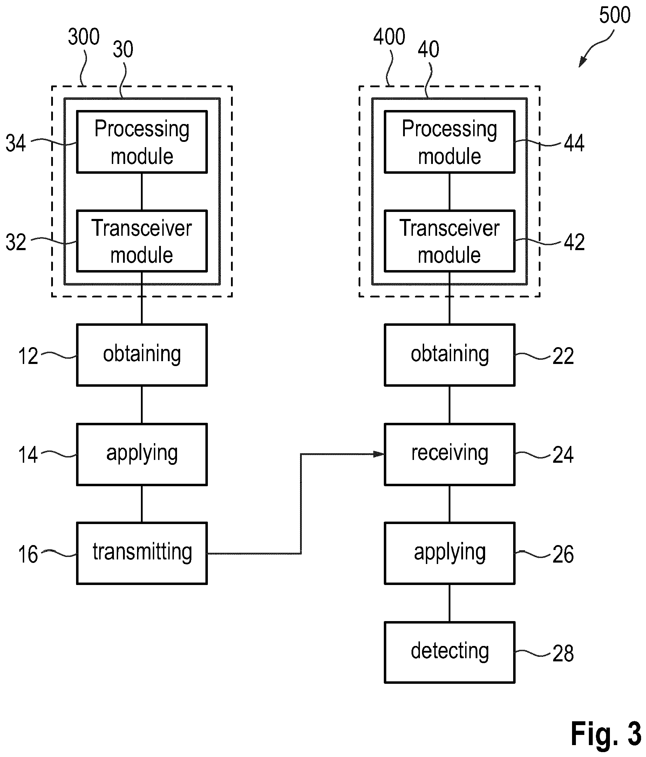

Fig. 3 illustrates block diagrams of embodiments of apparatuses 30, 40 for transmitting and/or receiving data in a mobile communication system 500 using multiple carriers, an embodiment of user equipment 300, 400, and an embodiment of an access node 300, 400. Fig. 3 shows an apparatus 30, 40 for transmitting and/or receiving data in the mobile communication system 500 using multiple carriers. The apparatus 30, 40 comprises a transceiver module 32, 42 configured to communicate in the mobile communication system 500. The apparatus 30, 40 further comprises a processing module 34, 44, which is coupled to the transceiver module 32, 42, and which is configured to control the transceiver module 32, 42. The processing module 34, 44 is configured to perform one of the methods 10, 20 as described herein.

As shown in Fig. 3, in this embodiment apparatus 30 operates as transmitter and conducts the steps of method 10. Apparatus 40 operates as receiver and conducts the steps of method 20. For example, the apparatus 30 may be comprised in an access node 300 and the apparatus 40 may be comprised in user equipment 400 and the embodiment illustrates downlink transmission. Embodiments may as well use the proposed mechanisms in the uplink. In such an embodiment the apparatus 30 may be comprised in user equipment 300 and the apparatus 40 may be comprised in an access node 400. Likewise, embodiments may be used for communication between user equipment, vehicles, or access nodes.

Fig. 3 illustrates block diagrams of embodiments of apparatuses 30, 40 for a wireless transmitter device 300 and for a wireless receiver device 300, 400, and embodiments of wireless transmitter and receiver devices 300, 400. Fig. 3 further illustrates an embodiment of a system 500 comprising a wireless transmitter 300 and a wireless receiver 400. A further embodiment is a method for a system comprising the method 10 as performed by the transmitter apparatus 30, 40 and the method 20 as performed by the receiver apparatus 30, 40.

The transceiver modules 32, 42 may be implemented as any means for transmitting, receiving or transceiving, i.e. receiving and/or transmitting etc., one or more transmitter/receiver units, one or more transmitter/receiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. In some embodiments, the processing modules 34, 44 may provide some functionality that may be found in transceiver modules. For example, the processing modules 34, 44 may be processing modules of the transmitter/receiver/transceiver modules 32, 42, and may comprise one or more filters or filter circuitry and/or one or more modulators or demodulators.

In embodiments the processing modules 34, 44 may be implemented using one or more processing units, one or more processing devices, any means for processing, such as a processor, a computer or a programmable hardware component being operable with accordingly adapted software. In other words, the described function of the processing module 44 may as well be implemented in software, which is then executed on one or more programmable hardware components. Such hardware components may comprise a general-purpose processor, a Digital Signal Processor (DSP), a micro-controller, etc. The respective processing modules 34, 44 may be configured to carry out any of the methods described herein.

The wireless devices 300, 400 may be any devices of a wireless communication system, e.g. a mobile communication system, an OTFS, system, a broadcast system, a unicast system etc.

In the following some detailed embodiments will be described using an OTFS system, which is only an example system. In embodiments other communication systems may be used. The spreading operation using the aggregated bandwidth may as well refer to an OFDM system or a CDMA (code Division Multiple Access) system, etc. Embodiments may use the aggregated bandwidth of the carriers for spreading the transmit signal.

For example, more details on a spreading operation using a Walsh Hadamard transformation can be found in Tharaj Thaj et al, "Orthogonal Time Sequence Multiplexing Modulation", ECSE Department, Monash University, Clayton, VIC 3800, Australia, https://www.techrxiv.org/articles/preprint/Orthogonal Time Sequence Multiplexing Modulation/ 13580201/2 . In embodiments the spreading operation is not limited to a specific transformation or processing.

The mobile communication system 500 may, for example, correspond to one of the Third Generation Partnership Project (3GPP)-standardized mobile communication networks, where the term mobile communication system is used synonymously to mobile communication network. The mobile or wireless communication system may correspond to a mobile communication system of the 5th Generation (5G) and/or 6th Generation (6G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Time-Frequency and Space (OTFS) system, an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A transceiver or wireless device 300, 400 may be a base station, a relay station or a mobile device of a mobile communication system. A base station or base station transceiver can be operable to communicate with one or more active mobile transceivers and a base station transceiver can be located in or adjacent to a coverage area of another base station transceiver, e.g., a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g., pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP (Third Generation Partnership Project) terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g., a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

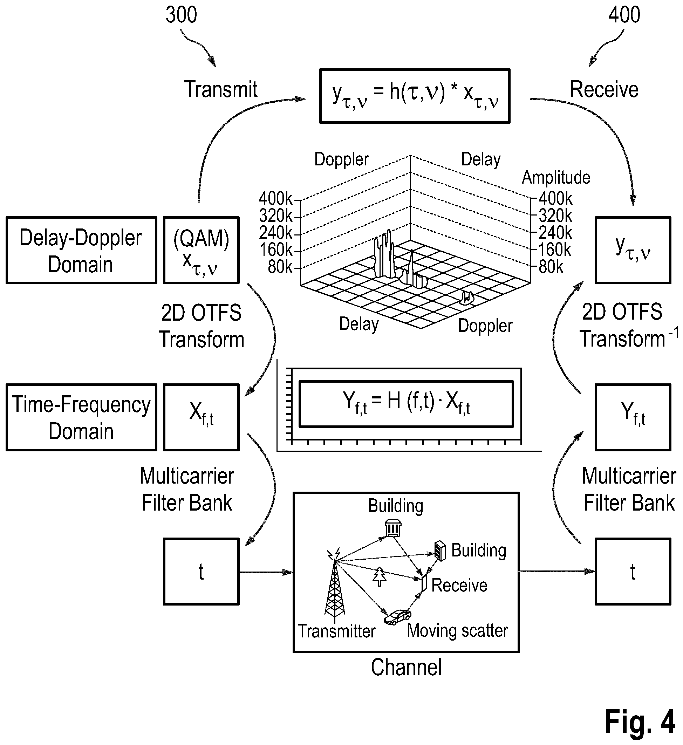

Fig. 4 shows multicarrier OTFS processing steps in an embodiment. Fig. 4 shows transmitter processing on the left and receiver processing on the right. At the top left, the transmitter 300 composes transmit symbols in the Delay-Doppler (DD) domain. Quadrature amplitude modulated (QAM) transmit symbols $x_{\tau,v}$ are inserted into a grid in the DD domain to obtain a DD transmitter representation. This DD transmitter representation is then transformed into the Time-Frequency (TF) domain using a two-dimensional transformation, e.g., a symplectic Fourier transform, which will be detailed subsequently. Another transform or a multicarrier filter bank is then used to transform the TF representation into the time domain, where the signal is transmitted to the receiver 400. The channel in the time domain is the well-known multi-path wireless channel.

At the receiver 400 the signal, which is distorted by the wireless channel, is received in the time domain and transformed or filtered into the TF domain. From the TF domain the signal can be transformed back into the DD domain to obtain receive symbols $y_{\tau,v}$, based on which the transmit symbols are estimated. In the DD domain $x_{\tau,v} = h(\tau,v) * x_{\tau,v}$, where $h(\tau,v)$ represents the wireless channel in the DD domain. As known in the TF domain the effects of the radio channel may be represented using the according spectra $Y_{f,t} = H(f,t) \cdot X_{f,t}$. For example, such a modulation scheme called OTFS addresses the challenges for 5G. The key idea behind OTFS is to multiplex a QAM symbol (data) in the DD signal representation.

Fig. 4 shows the three used domains for OTFS:

First, the delay-Doppler-domain (DD-domain), where the data symbol is placed;
second, the time-frequency domain (TF-domain); and
third, the time domain, where the waveform is transmitted through the channel. There are two changes of domains realized by two 2D transforms (or filter bank operations).

The first and most important transform (principle behind OTFS modulation) is the OTFS transform from the DD-domain to the TF-domain, which can be described as

$$X[n,m] = \frac{1}{NM} \sum_{k=0}^{N-1} \sum_{l=0}^{M-1} x[k,l] e^{j*2\pi*(\frac{ml}{M} - \frac{nk}{N})} \qquad (1)$$

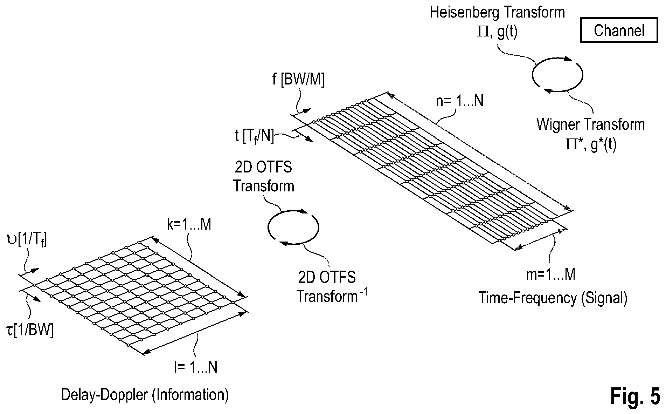

N (indexed by n) and M (indexed by m) correspond to the number of symbols and subcarrier, respectively. Fig. 5 illustrates symplectic Fourier duality in an embodiment. Furthermore, $x[k,l]$ corresponds to each delay-Doppler QAM symbol and X[n,m] to the spread or "code" in the TF-domain. Fig 5 shows the DD domain at the bottom left, the TF domain in the middle, and the time domain at the top right. The grid in the DD domain is determined by the bandwidth (1/BW) in the TF domain and the duration $T_1$ of a radio frame in the TF domain. As known for these transformations the sampling duration in one domain may determine resolution in the other domain and vice versa. The Heisenberg transform is one candidate to transform from the TF domain to the time domain and the Wigner transform is a candidate to transform back from the time domain to the TF domain. These transforms are also called Gabor (or Weyl-Heisenberg) transform (Gabor synthesis filterbank corresponds to a Heisenberg transform and Gabor Analysis Filterbank corresponds to a Wigner transform).

The OTFS transform can be seen as the following basis function (time-frequency spreading):

$$B_{nm}(k,l) = e^{j*2\pi*(\frac{nk}{N} - \frac{ml}{M})} \qquad (2)$$

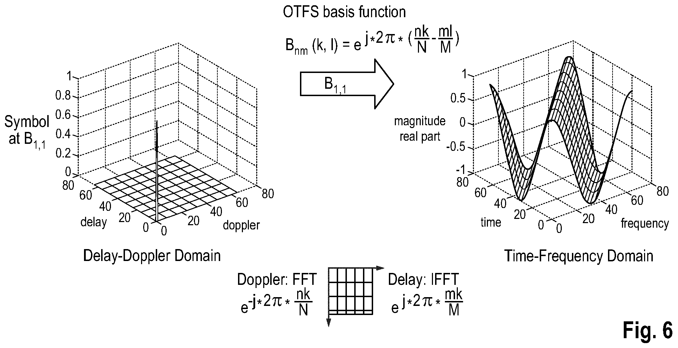

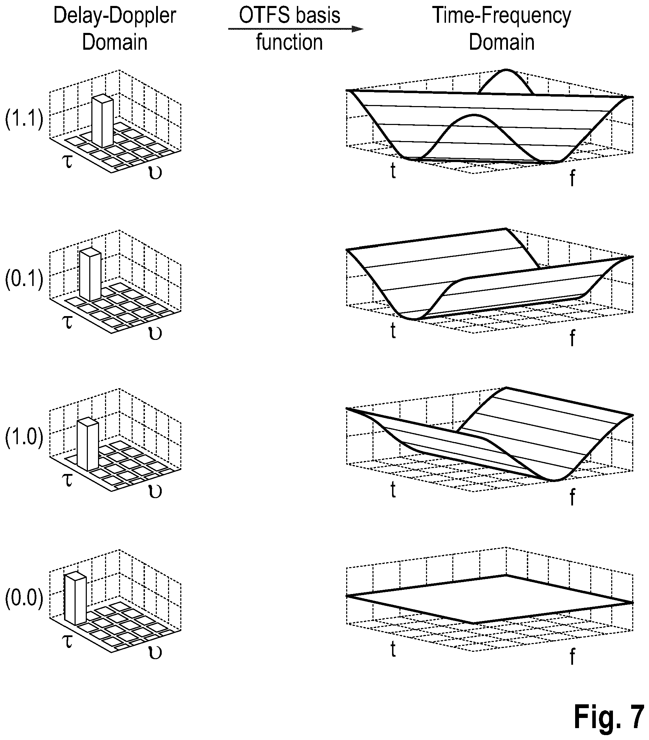

Fig. 6 depicts an example for an OTFS basis function, which spreads one symbol in the DD domain over the entire TF-domain in an embodiment. The one symbol in the DD domain is shown on the left as a sharp pulse at grid point 0,0 (0 delay, 0 Doppler). For each QAM symbol (depending on position) the resulting waveform is spread over the time-frequency domain is different. Fig. 6 shows such a waveform in the TF domain on the right. This is further illustrated in Fig. 7, which shows examples for an OTFS basis function, which spreads the symbols in the time-frequency domain in an embodiment. Different symbol positions in the DD domain result in different waveforms in the TF domain.

The second 2D transform is called Heisenberg transform and can be seen as a legacy multicarrier transform as used for OFDM (orthogonal frequency division multiplexing), if it is a one-dimensional transform, i.e N=1, and a rectangular pulse is used.

$$x(t) = \sum_{n=0}^{N-1} \sum_{m=0}^{M-1} X[n,m] \, \varphi_{tx}(t - nT) \, e^{-2\pi*m*\Delta f*(t-nT)}$$

Where $\varphi_{tx}$ is the transmit pulse, which has to be orthogonal with the receive pulse. For more information about OTFS the reader is encouraged to read

Hadani, Ronny, and Anton Monk, "OTFS: A new generation of modulation addressing the challenges of 5G." arXiv preprint arXiv: 1802.02623 (2018); and

Hadani, Ronny, et al., "Orthogonal time frequency space modulation." Wireless Communications and Networking Conference (WCNC), 2017 IEEE, IEEE, 2017.

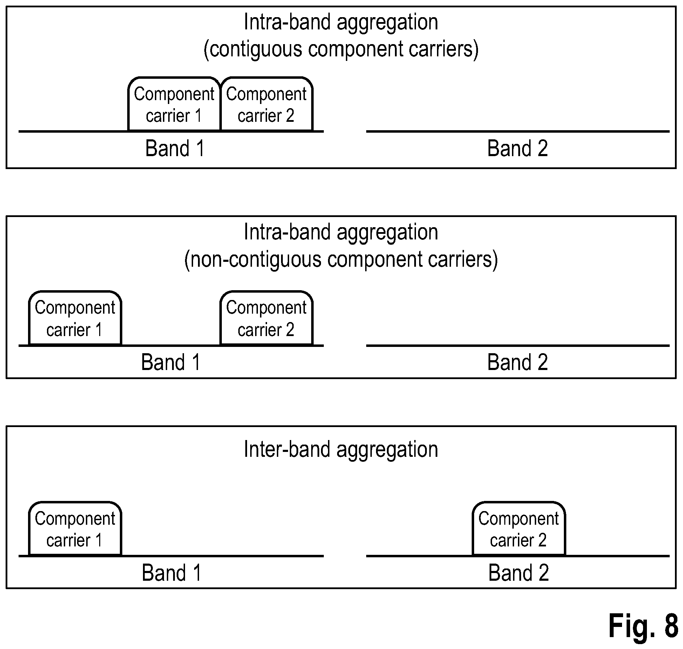

One of the most important features of 5G or even 4G is carrier aggregation. The idea behind carrier aggregation is that one user can get more than one carrier assigned to it. This enables the massive increase of throughput for such users. Fig. 8 shows the three possible types of carrier aggregation. Fig. 8 illustrates carrier aggregation in embodiments. At the top, Fig. 8 shows a first situation in which there are two contiguous (no gap in between) component carriers ("component carrier 1" and "component carrier 2") in a first band "Band 1" on the left and no carriers in a second band "Band 2" on the right. In the middle Fig. 8 shows a second situation in which there are two non-contiguous (with a gap in between) carriers in "Band 1" and no carriers in "Band 2". At the bottom Fig. 8 shows a third situation with one component carrier in each band.

In embodiments the first situation may be exploited to spread the transmit signal over the aggregated bandwidth of both component carriers ("component carrier 1" and "component carrier 2"), or even more than two contiguous carriers. The method 10 may then further comprise generating one or more transmit symbols in a Delay-Doppler domain to obtain a Delay-Doppler representation and transforming the Delay-Doppler representation into a Time-Frequency domain to obtain a Time-Frequency representation as spread signal. The Time-Frequency representation then has the aggregated bandwidth.

For each carrier channel estimation with pilots and guard symbols needs to be done. Conventionally, the OTFS symbols would be spread over one carrier (a carrier includes subcarriers see LTE (Long Term Evolution) structure and definition). In the case of intra-band aggregation with contiguous component carriers (see Fig. 8 at the top) the spreading (see Fig. 6) can be done not only over one but also two (or more) carriers. In embodiments the spreading may comprise any signal processing that is based on the aggregated bandwidth rather than on two separate component carriers. That way, the overhead may be reduced e.g. by applying TF spreading over more than one carrier. For example, the method 10 may further comprise adding pilot symbols to the spread signal, transforming the spread signal to the time domain to obtain a time domain representation, and transmitting the time domain representation to the wireless receiver device. At least in some embodiments further overhead reduction may be achieved through omission of guard symbols. For example, in case of intra-band aggregation with contiguous component carriers the time frequency spreading can be done not only over one but also two (or more) carriers, treated like a single carrier with aggregated bandwidth (which may comprise multiple carriers and subcarriers).

In the case of contiguous intra-band carrier aggregation the TF spreading of a OTFS symbol may be done over two or more carriers by the transmitter (e.g. a base station). This may decrease the overhead for control signaling, such as channel estimation and pilot and guard symbols. In addition, it may increase a spreading gain and hence improve the performance. The OTFS diversity of the OTFS system may be enhanced. In embodiments the method 10 may further comprise informing the wireless device on the aggregated bandwidth. The carrier aggregation may be dynamic or semi-static and the communicating devices may inform each other about the aggregation modus. In highly dynamic systems, carrier aggregation may be determined as part of a scheduling decision on a short time basis, such as a time transmission interval. The method may then further comprise scheduling the wireless device based on the aggregated bandwidth.

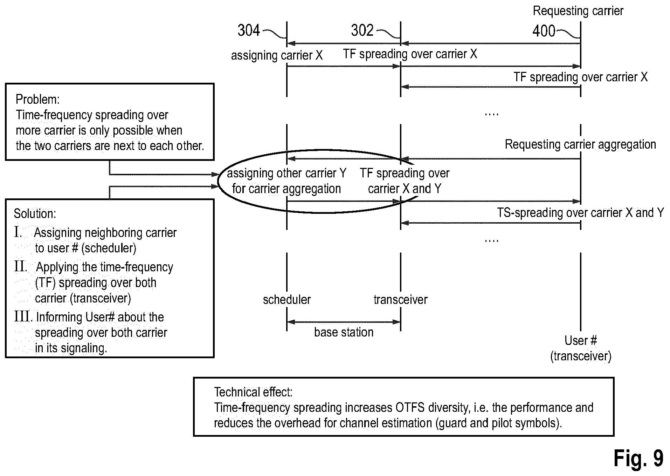

A scheduler may target to schedule one user in one band and carrier aggregation in a contiguous way in embodiments to enable the according processing advantages/benefits. The method 10 may then comprise scheduling the wireless device based on the aggregated bandwidth. Fig. 9 depicts an overview of the problem and solution for OTFS carrier aggregation. Fig. 9 depicts a message sequence in an embodiment. Fig. 9 shows a message sequence between a base station 300 (access node), with a scheduler 304 (e.g. implemented in an according processing module) and a transceiver (implemented in an according transceiver module), and user equipment 400.

The user equipment 400 first requests a carrier. Upon the request the scheduler 304 assigns a carrier X and the transceiver module 302 carries out TF spreading over carrier X. As further shown in Fig. 9 the user equipment may request carrier aggregation. The scheduler 304 is aware of the problem that TF spreading over more than one carrier is only possible when the two or more carriers are next to each other (contiguous). Therefore, another carrier Y is assigned for carrier aggregation and the transceiver module 302 applies TF spreading/de-spreading over carriers X and Y and the user equipment may also apply despreading/spreading over carriers X and Y. The TF-spreading is applied to both carriers and the user equipment is informed about the spreading over both carriers using according signaling, e.g. together with a scheduling grant. In this embodiment the scheduling comprises assigning at least a contiguous part of the aggregated bandwidth to the wireless device.

The TF-spreading increases the OTFS diversity and therewith improves the performance and reduces the overhead for channel estimation (guard and pilot symbols).

For example, TF spreading over two carriers is used in an embodiment:

I. One user gets two carriers assigned by the scheduler for carrier aggregation, which are next to each other (contiguous, cf. Fig. 8 at the top).
II. Therefore, the TF spreading by the transmitter can be applied over both carriers.
III. This leads to lower overhead and higher OTFS gain.

In embodiments, schedulers may be adapted accordingly. For example, the scheduler may enable carrier aggregation by prioritizing scheduling of contiguous carriers. A scheduler may schedule as many users as possible with carrier aggregation using TF spreading over the aggregated bandwidth. Therefore, one user may get assigned two or more carriers next to each other. For example, the method 10 comprises transmitting using groups of contiguous carriers in different bands. The method 10 may further comprise scheduling multiple users using the groups of contiguous carriers in the different bands. Furthermore at least in some embodiments, the method 10 may comprise prioritizing scheduling contiguous carries over scheduling non-contiguous carriers to a user.

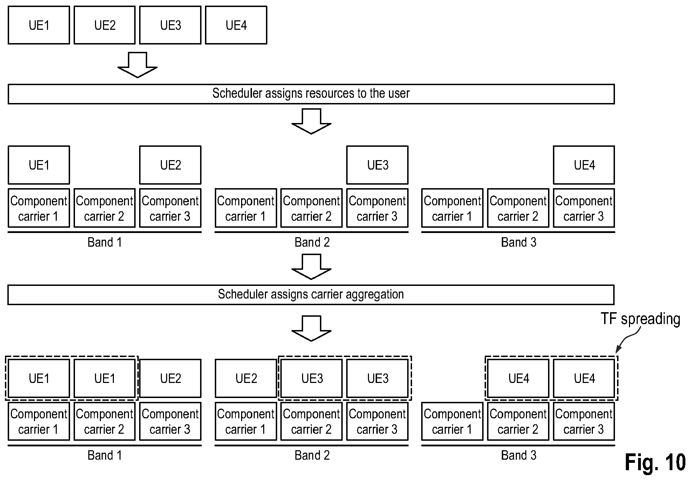

Fig. 10 illustrates scheduling with carrier aggregation in an embodiment. Fig. 10 illustrates a scheduler, which assigns communication resources to a group of four user equipment UE1, UE2, UE3, and UE4. The communication resources extent over three bands, Band 1, Band 2, and Band 3, each having three component carriers. As shown in the middle of Fig. 10 in a first scheduling scheme the scheduler assigns the UEs with gap, i.e. assigning a component carrier to a UE and leaving an adjacent component carriers unassigned. In a second scheduling step or scheme carrier aggregation is assigned and the gaps are filled. The open gaps from the first scheduling scheme/step allow the scheduler to assign contiguous carriers to the UEs in the second scheduling step. TF-spreading can then be applied across the aggregated bandwidth.

Embodiments may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP as layer 3 control plane messages. For example, physical layer specification, e.g. by means of DDRs and other physical layer specifications may also be affected by present embodiments, e.g. *.201, *.211, *.212, *.213, *.214, *.216 series in the 3GPP specifications.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Reference list**

| | |
|---|---|
| 10 | method for transmitting data in a mobile communication system using multiple carriers |
| 12 | obtaining information on conducting a transmission on two or more contiguous carriers |
| 14 | applying a spreading operation to a transmit signal across an aggregated bandwidth of the two or more contiguous carriers to obtain a spread signal |
| 16 | transmitting data to a wireless device using the spread signal |
| 20 | method for receiving data in a mobile communication system using multiple carriers |
| 22 | obtaining information on a transmission on two or more contiguous carriers |
| 24 | receiving a signal on the two or more contiguous carriers |
| 26 | applying a de-spreading operation to the signal across an aggregated bandwidth of the two or more contiguous carriers to obtain a de-spread signal |
| 28 | detecting data from the de-spread signal |
| 30, 40 | apparatus for transmitting and/or receiving data in a mobile communication system using multiple carriers |
| 32, 42 | transceiver module |
| 34, 44 | processing module |
| 300 | wireless device, access node, user equipment |
| 302 | transceiver (module) |
| 304 | scheduler |
| 400 | wireless device, user equipment, access node |
| 500 | communication system |
| Band 1 | Transmission band |
| Band 2 | Transmission band |
| Band 3 | Transmission band |
| Component Carrier 1,2 | Carrier within a transmission band |

**Claims**

1. A method (10) for transmitting data in a mobile communication system (500) using multiple carriers, the method (10) comprising
   obtaining (12) information on conducting a transmission on two or more contiguous carriers;
   applying (14) a spreading operation to a transmit signal across an aggregated bandwidth of the two or more contiguous carriers to obtain a spread signal; and
   transmitting (16) data to a wireless device (300; 400) using the spread signal.

2. The method (10) of claim 1 further comprising generating one or more transmit symbols in a Delay-Doppler domain to obtain a Delay-Doppler representation and transforming the Delay-Doppler representation into a Time-Frequency domain to obtain a Time-Frequency representation as spread signal, the Time-Frequency representation having the aggregated bandwidth.

3. The method (10) of one of the claims 1 or 2, further comprising adding pilot symbols to the spread signal, transforming the spread signal to the time domain to obtain a time domain representation, and transmitting the time domain representation to the wireless receiver device.

4. The method (10) of one of the claims 1 to 3, further comprising informing the wireless device (300; 400) on the aggregated bandwidth.

5. The method (10) of one of the claims 1 to 4, further comprising scheduling the wireless device (300; 400) based on the aggregated bandwidth.

6. The method (10) of claim 5, wherein the scheduling comprises assigning at least a contiguous part of the aggregated bandwidth to the wireless device (300; 400).

7. The method (10) of one of the claims 1 to 6, further comprising transmitting using groups of contiguous carriers in different bands.

8. The method (10) of claim 7, further comprising scheduling multiple users using the groups of contiguous carriers in the different bands.

9. The method (10) of claim 8, further comprising prioritizing scheduling contiguous carries over scheduling non-contiguous carriers to a user.

10. The method (10) of one of the claims 1 to 9, wherein the obtaining comprises scheduling the transmission on the two or more contiguous carriers.

11. A method (20) for receiving data in a mobile communication system (500) using multiple carriers, the method (20) comprising
    obtaining (22) information on a transmission on two or more contiguous carriers;
    receiving (24) a signal on the two or more contiguous carriers;
    applying (26) a de-spreading operation to the signal across an aggregated bandwidth of the two or more contiguous carriers to obtain a de-spread signal; and
    detecting (28) data from the de-spread signal.

12. A computer program having a program code for performing at least one method (10; 20) according to one of the claims 1 to 11, when the computer program is executed on a computer, a processor, or a programmable hardware component.

13. An apparatus (30; 40) for transmitting and/or receiving data in a mobile communication system (500) using multiple carriers, the apparatus (30; 40) comprising
    a transceiver module (32; 42) configured to communicate in the mobile communication system (500); and
    a processing module (34; 44) configured to
    control the transceiver module (32, 42),
    perform one of the methods (10; 20) of claims 1 to 11.

14. An access node (300; 400) of a wireless communication system (500) comprising the apparatus (30; 40) of claim 13.

15. User equipment (300; 400) for a wireless communication system (500) comprising the apparatus (30; 40) of claim 13.

10

```
┌─────────────────────────────────────────────┐
│   obtaining information on conducting a       │
│  transmission on two or more contiguous carriers │────12
└─────────────────────────────────────────────┘
                      │
                      ▼
┌─────────────────────────────────────────────┐
│  applying a spreading operation to a transmit signal across │
│     an aggregated bandwidth of the two or more │────14
│     contiguous carriers to obtain a spread signal │
└─────────────────────────────────────────────┘
                      │
                      ▼
┌─────────────────────────────────────────────┐
│   transmitting data to a wireless device      │
│          using the spread signal              │────16
└─────────────────────────────────────────────┘
```

Fig. 1

20

obtaining information on a transmission
on two or more contiguous carriers — 22

receiving a signal on the two
or more contiguous carriers — 24

applying a de-spreading operation to the signal
across an aggregated bandwidth of the two or more
contiguous carriers to obtain a de-spread signal — 26

detecting data from the de-spread signal — 28

Fig. 2

300 30
34 — Processing module
32 — Transceiver module

400 40
Processing module — 44
Transceiver module — 42

500

12 — obtaining
14 — applying
16 — transmitting

obtaining — 22
receiving — 24
applying — 26
detecting — 28

Fig. 3

300

400

Transmit

$$y_{\tau,\nu} = h(\tau,\nu) * x_{\tau,\nu}$$

Receive

| Delay-Doppler Domain | (QAM) $x_{\tau,\nu}$ |
|---|---|

Doppler          Delay
Amplitude
400k
320k
240k
160k
80k

400k
320k
240k
160k
80k

Delay          Doppler

$y_{\tau,\nu}$

2D OTFS
Transform

2D OTFS
Transform$^{-1}$

| Time-Frequency Domain | $X_{f,t}$ |
|---|---|

$$Y_{f,t} = H(f,t) \cdot X_{f,t}$$

$Y_{f,t}$

Multicarrier
Filter Bank

Multicarrier
Filter Bank

t

Building

Building

Receive

Transmitter    Moving scatter

Channel

t

## Fig. 4

Fig. 5

OTFS basis function

$$B_{nm}(k, l) = e^{j*2\pi * (\frac{nk}{N} - \frac{ml}{M})}$$

Symbol at $B_{1,1}$

$B_{1,1}$

magnitude real part

Delay-Doppler Domain

Time-Frequency Domain

Doppler: FFT
$e^{-j*2\pi * \frac{nk}{N}}$

Delay: IFFT
$e^{j*2\pi * \frac{mk}{M}}$

Fig. 6

Delay-Doppler Domain → OTFS basis function → Time-Frequency Domain

Fig. 7

Intra-band aggregation
(contiguous component carriers)

Component
carrier 1

Component
carrier 2

Band 1

Band 2

Intra-band aggregation
(non-contiguous component carriers)

Component
carrier 1

Component
carrier 2

Band 1

Band 2

Inter-band aggregation

Component
carrier 1

Component
carrier 2

Band 1

Band 2

Fig. 8

Fig. 9

EP 4 099 600 A1

| UE1 | UE2 | UE3 | UE4 |

⇩

Scheduler assigns resources to the user

⇩

| UE1 | | UE2 | | | UE3 | | | UE4 |

| Component carrier 1 | Component carrier 2 | Component carrier 3 | Component carrier 1 | Component carrier 2 | Component carrier 3 | Component carrier 1 | Component carrier 2 | Component carrier 3 |

Band 1     Band 2     Band 3

⇩

Scheduler assigns carrier aggregation

⇩

TF spreading

| UE1 | UE1 | UE2 | UE2 | UE3 | UE3 | | UE4 | UE4 |

| Component carrier 1 | Component carrier 2 | Component carrier 3 | Component carrier 1 | Component carrier 2 | Component carrier 3 | Component carrier 1 | Component carrier 2 | Component carrier 3 |

Band 1     Band 2     Band 3

Fig. 10

Europäisches
Patentamt

European
Patent Office

Office européen
des brevets

## EUROPEAN SEARCH REPORT

Application Number

EP 21 17 7648

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/188486 A1 (LG ELECTRONICS INC [KR]) 2 November 2017 (2017-11-02) * the whole document * & US 2021/234647 A1 (LEE SANGRIM [KR] ET AL) 29 July 2021 (2021-07-29) * paragraph [0006] - paragraph [0008] * * paragraph [0052] - paragraph [0058] * * paragraph [0061] - paragraph [0063] * * paragraph [0080] - paragraph [0087] * * figure 10 * * paragraph [0097] * * paragraph [0100] * | 1-15 | INV. H04L5/00 H04W72/04 H04W72/12 |
| X | US 2021/105155 A1 (KONS SHACHAR [US] ET AL) 8 April 2021 (2021-04-08) * paragraph [0005] * * paragraph [0008] - paragraph [0009] * * paragraph [0082] * * paragraph [0086] - paragraph [0102] * | 1-15 | |
| X | LG ELECTRONICS: "Uplink Multiple Access scheme", 3GPP DRAFT; R1-050638, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sophia Antipolis, France; 20050615, 15 June 2005 (2005-06-15), XP050111449, [retrieved on 2005-06-15] | 1,3-15 | TECHNICAL FIELDS SEARCHED (IPC) H04L H04W |
| A | * section 2-3 * | 2 | |

-/--

The present search report has been drawn up for all claims

| Place of search | Date of completion of the search | Examiner |
|---|---|---|
| The Hague | 2 November 2021 | Sklavos, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHATERI M ET AL: "4MORE Uplink System Level Performance", 16TH IST MOBILE AND WIRELESS COMMUNICATIONS SUMMIT, 2007 IEEE PISCATAWAY, NJ, USA,, 1 July 2007 (2007-07-01), pages 1-5, XP031132404, ISBN: 978-1-4244-1662-2 | 1,3-15 | |
| A | * section II.A-II.B; page 1 - page 2 * ----- | 2 | |

**TECHNICAL FIELDS SEARCHED (IPC)**

The present search report has been drawn up for all claims

| Place of search | Date of completion of the search | Examiner |
|---|---|---|
| The Hague | 2 November 2021 | Sklavos, Alexandros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 7648

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2021

| Patent document cited in search report | Publication date | Patent family member(s) | Publication date |
|---|---|---|---|
| WO 2017188486 A1 | 02-11-2017 | US 2021234647 A1<br>WO 2017188486 A1 | 29-07-2021<br>02-11-2017 |
| US 2021105155 A1 | 08-04-2021 | EP 3750252 A1<br>US 2021105155 A1<br>WO 2019157230 A1 | 16-12-2020<br>08-04-2021<br>15-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019036492 A1
- EP 3367602 A1
- US 20190159134 A1

**Non-patent literature cited in the description**

- **WEI, ZHIQIANG et al.** *Orthogonal Time-Frequency Space Modulation: A Full-Diversity Next Generation Waveform,* 2020
- Orthogonal Time Sequency Multiplexing Modulation. **THARAJ THAJ et al.** ECSE Department. Monash University
- **HADANI, RONNY ; ANTON MONK.** *OTFS: A new generation of modulation addressing the challenges of 5G,* 2018
- **HADANI, RONNY et al.** Orthogonal time frequency space modulation.'' Wireless Communications and Networking Conference (WCNC). IEEE, 2017